Europäisches Patentamt

European Patent Office

Office européen des brevets

(11) Publication number: **0 481 119 A1**

# EUROPEAN PATENT APPLICATION

(21) Application number: **90120081.6**

(22) Date of filing: **19.10.90**

(51) Int. Cl.5: **B29C 45/14**

(43) Date of publication of application:
**22.04.92 Bulletin 92/17**

(84) Designated Contracting States:
**DE FR GB IT NL SE**

(71) Applicant: **Sakaitani, Katsutoshi**
**No. 24-22, 6-chome, Shinjuku-cho**
**Kawagoe-shi, Saitama-ken(JP)**
Applicant: **Nakamura, Hiroyuki**
**No. 22-6, Wakitahoncho**
**Kawagoe-shi, Saitama-ken(JP)**
Applicant: **Miyagi, Kiyoshi**
**No. 7-3 Kobushi-cho**
**Tokorozawa-shi, Saitama-ken(JP)**

(72) Inventor: **Sakaitani, Katsutoshi**
**No. 24-22, 6-chome, Shinjuku-cho**
**Kawagoe-shi, Saitama-ken(JP)**
Inventor: **Nakamura, Hiroyuki**
**No. 22-6, Wakitahoncho**
**Kawagoe-shi, Saitama-ken(JP)**
Inventor: **Miyagi, Kiyoshi**
**No. 7-3 Kobushi-cho**
**Tokorozawa-shi, Saitama-ken(JP)**

(74) Representative: **Kirby, Harold Douglas Benson**
**et al**
**G.F. Redfern & Company Marlborough Lodge**
**14 Farncombe Road**
**Worthing West Sussex BN11 2BT(GB)**

(54) **Synthetic resin moulding and method for the manufacture thereof.**

(57) Mouldings possessing a front and rear layer of different properties and capable of backlighting, and a method for the manufacture thereof are disclosed. To a 0.1mm - 2.0mm thick synthetic resin sheet (7) is applied, by means of the screen printing method, an ink layer (8), applied as a single layer 4µ or more thick (preferably 5µ or more), and/or an ink film layer, applied in two or more layers, 8µ or more thick (preferably 10µ or more). After processing to a form so that the synthetic resin sheet (7) thus printed can be placed inside a moulding die (1) adjacent to an inner surface of the die, the die is closed and molten resin (6) is injected to form the moulding.

*FIG.1*

The present invention relates to synthetic resin mouldings with front and rear layers of different properties, in which the front layer bears a printed surface capable of backlighting, i.e. capable of making the pictorial image or lettering printed thereupon look bright, when viewed from the front, if light is shone from the rear of the product and to a method for the manufacture thereof.

It is common knowledge that backlighting products are used in various panels including automobile instrument panels and front panels of audio products.

These products are manufactured by printing the required image on to a synthetic resin sheet or on to synthetic resin mouldings.

When an image is printed on to a synthetic resin sheet, it is possible to manufacture a multiplicity of 30 or 40 products simultaneously if a sheet having a large surface area is employed. If, however, an image is printed on to a synthetic resin moulding, it is possible to manufacture only a very small number of a mere two or four products simultaneously, thereby resulting in a low productivity.

Even if a multiplicity of mouldings were printed simultaneously, it would, consequently, be extremely complicated and expensive to produce the holding jigs for securing these mouldings. And, further, even if it were possible to produce high-accuracy holding jigs, the respective print surfaces of the multiplicity of mouldings would inevitably be at slightly different heights due to variations in the moulded products so that it would not be possible to achieve high-quality products, and the operating result would be most likely to give a low production yield.

Furthermore, the printing of mouldings is a laborious operation in view of the extensive product handling requirements so that it requires approximately twice the number of operators than sheet printing does.

Moreover, if multi-colour printing is applied, the mouldings require repeated washing and handling to thoroughly remove dust and dirt particles from the surface so that some impact forces, minor though they may be individually, will be applied to the moulding. Under the cumulative action of these frequently repeated impact forces, however, the mouldings will, in the course of time, fracture, and protruding parts will break off.

For the printing of mouldings it is essential that the print surface should be flat. Yet, even if the moulding itself is flat, the holding jig tends to result in minor incurvation and sloping of the surface, thereby causing a reduction in product quality and thus a drop in the production yield.

Further, mouldings are not always flat and will occasionally be found to have convexities or concavities on one or many of their surfaces.

Furthermore, certain parts may have convexities and concavities on their surfaces.

This renders the surface incapable of being printed, except by the special printing technique known as pad printing.

While printing by the pad printing method may produce surfaces that appear perfect on cursory inspection, it cannot meet the essential objective, since, with the use of backlighting, a process deemed necessary also for moulding products such as automobile instrument panels and audio products, and entailing that the printed pattern and lettering should stand out clearly against the light shone from the rear, the printed pattern and lettering that should stand out clearly will appear to be riddled with pinholes while the other (normally black background) parts are suffused with light resulting in a pattern similar to that of a star-speckled sky at night.

Apart from those printing techniques involving the direct application of print on to the moulding, the following methods are available for providing a print surface to the moulding.

One such method is known as the Simultranser System (in-mould technique). This is a fully integrated moulding and printing system in which a transfer image foil is positioned inside the injection moulding die and the image is transferred onto the moulding in the moulding process, so that the moulding process and the transfer image application process are accomplished in a single operation.

The problem associated with this process, however, lies in the fact that since only the ink film layer printed on the film is transferred on to the moulding during the moulding process, the weld lines and gate marks generated on the moulding cannot be concealed so that the product's appearance suffers.

Another such method is known as the heat transfer system, a process in which a printed area (pattern), that is, a pattern printed on a film, is heat-transferred on to a moulding by means of a hot stamping device.

The purpose of the present invention is therefore to provide a method for the manufacture, at high quality and high productivity, of mouldings imparted with a printed area and capable of backlighting.

The inventors of the present invention have discovered that it is possible to manufacture, at high quality and high productivity, mouldings possessing a front and rear surface endowed with layers of different properties and capable of backlighting, by printing a synthetic resin sheet first by means of a screen printing process, by then processing this in a manner so that the synthetic resin sheet thus printed can be place in the synthetic resin moulding die, and by finally injection-moulding the molten resin after placing said synthetic resin sheet therein and closing the die.

Thus, the present invention provides mouldings possessing a front or rear layer of different properties and capable of backlighting, and a method for the manufacture thereof by printing a pattern on one or both sides of a synthetic resin sheet, preferably by means of a screen printing method, so that after printing the thickness of the ink film applied as a single layer will be 4μ or more (preferably 5μ or more) and the thickness of the ink layer applied in two or more layers will be 8μ or more (preferably 10μ or more), and after processing to a form enabling the synthetic resin sheet thus printed to be placed inside the moulding die, with the synthetic resin sheet adjacent to the inner surface of the die, whereupon the die is closed and molten resin for forming the moulding is injected into the die.

The synthetic resin sheet used in accordance with the present invention is required to have a thickness from and including 0.1mm up to and including 2.0mm.

If it has a thickness of less than 0.1mm, its mechanical strength is not adequate and it may separate from the die surface due to the structure of the die.

Further, it will partially melt under the influence of the high temperature of the molten resin in the die so that it will not be able to retain its shape.

Conversely, if the sheet has a thickness greater than 2.0mm it will not present problems when charged into the die but will be a limiting factor when processing it to such a shape that it can be placed into the die after it has been printed, a problem that may arise when using a punch die.

The processing operation will thus have to be performed by cutting the sheet to size with a circular saw, for example, productivity will have been substantially reduced so that this operation is not feasible as an industrial production process.

Moreover, when the die surface is curved, the sheet, if thicker than 2.0mm, will not orient itself along the die surface even when the molten resin is injection-moulded, so that the desired mouldings cannot be obtained.

A major feature of the present invention is that it permits printing to be present on the curved surface areas of mouldings with curved surfaces.

If the synthetic resin sheet is printed by means of a screen printing process, the thickness of the ink film layer applied as a single layer must be 4μ or more.

This thickness is the thickness after the ink has been allowed to dry after printing.

The screen printing technique is ideally suited for increasing the thickness of the ink film.

Other printing methods produce only a thin ink film of 1μ thickness or less at one pass.

If the ink film has a thickness of less than 4μ, the result will be the emergence of pinholes so that the backlighting capability cannot be achieved.

If the printed section is black and forms the background (that is, if there are no patterns and/or lettering), it will be necessary to superimpose two print layers so as to obtain an ink film thickness of 8μ or more.

This is required because background sections tend to give rise to pinholes more easily than do printed patterns and lettering only in the large surface areas, thereby leading to light effusion on backlighting.

To enable a synthetic resin sheet printed in the manner described above to be placed in the die, it is processed to the shape of the die cavity.

If the sheet is thin, it may be cut with scissors or shears, and if it is thick, it may be cut with a circular saw, although this does not raise productivity.

It is therefore necessary to cut the sheet to the required shape in a punching operation by preparing a punch die and mounting it on to a press for punching.

If the finished moulding is to have perforations or openings, the punch die should be prepared so that perforations of the same dimensions and shape are obtained.

The punching dimensions for the printed sheet will differ according as to the requirements specified for the mouldings.

If the printed sheet is stuck around the moulding to cover it as far as the side surfaces, the sheet should be punched out to a size that exceeds the size of the aperture of the moulding die, and this only by the required dimensions, and if it is an angular-shaped moulding, the four corners should be cut off.

After this, the parts around the sides are folded over to impart a certain box-shape configuration.

If the moulding surface and the printed sheet surface have the same dimensions, the printed sheet may be punched out to correspond to the size and shape of one surface of the die cavity.

In the two cases above, no problem will occur when the printed sheet is placed in the die.

The same also applies if the mouldings have perforations.

In this case, the perforations made in the printed sheet should have the same dimensions as the moulding die. If the moulded resin surface is to be exposed at the periphery of the surfaces of the mouldings, the printed sheet should be made smaller only by the dimensions to be exposed.

In this case, minute apertures are made in the die and these perforations are connected to a vacuum machine to draw a vacuum so that the printed sheet inserted in the die is firmly positioned and held on the moulding die, with the centre of the die surface accurately aligned with the centre of the printed sheet.

The printed sheet is placed in the die as described above and the die is closed to inject the molten resin for injection moulding.

The path (gate) through which the molten resin is introduced into the die should preferably be such that the jet of molten resin does not directly come into contact with the printed sheet.

If the molten resin is brought in direct contact with the sheet, the sheet may easily be destroyed under the influence of the high temperature and pressure of the molten resin.

The present invention uses extremely simple technology in that a printed synthetic resin sheet is charged into a moulding die and a molten resin injected into said moulding die to obtain mouldings that are capable of backlighting.

A further technical characteristic is the facility with which a printed surface with a thick ink film layer can be securely maintained in the side of the moulding.

The charging of the sheet into the moulding die at the time of moulding is a simple operation.

It is possible to impart, with great ease, a printed surface with a thick film layer to the front or rear surface of the moulding with one or several curved surfaces to achieve a backlighting capability.

The process according to the present invention has a productivity several times that achievable with the direct printing of mouldings.

The process according to the present invention is characterised by a much lower reject rate than that associated with the direct printing of mouldings.

The process according to the present invention has a low cost effect in that, by comparison with the direct printing of mouldings on a one-by-one basis, it permits the simultaneous printing of a multiplicity of mouldings.

The printed mouldings obtained by the process according to the present invention are of an attractive appearance and do not present any of the weld lines and gate marks that tend to occur with such methods as the direct printing of mouldings and the transfer-printing of an ink film from a printed film onto a moulding.

Embodiments of the invention will now be described in detail with reference to the accompanying drawing, in which:

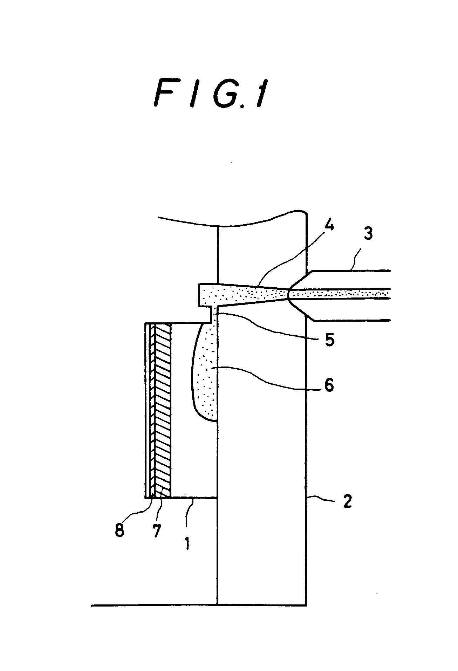

Figure 1 is a partial cross-sectional view of a mould cavity with a printed sheet placed therein, at the start of the injection moulding step.

EXAMPLE 1

Square-shape white printed areas of 105mm side length were applied by screen printing on to a polycarbonate sheet of 0.5mm thickness, 670mm length, and 450mm width, the number of squares totalling 24, being 6 rows of 4 squares at 3mm spacing in the horizontal.

The ink film thickness in these white print patterns was $8\mu$. Printing was then performed with black ink in such a manner that speed markings from 0km/hr to 200km/hr, at a pitch of 1km/hr, and lettering remained as white marks on the black background along a circular arc over an angular range of 120 degrees, said circular arc being of 45mm radius and being located within each of the squares and having the same centre as said squares. The white markings and the white lettering had a width of 0.5mm and a length of 6mm. In an alternative pattern, the white markings and the white lettering were of 2.0mm width and 10mm length, respectively, and were applied at a pitch of 10km/hr.

All parts other than punch markings and punch lettering were black, in other words, they formed the background.

Printing with black ink was then repeated, with the second black printing being superimposed upon the first black printing.

The film thickness after the superimposed double black ink print application was a total of $15\mu$.

The time required for printing the entire sheet of 24 squares amounted to 37 seconds, and the yield was approximately 96% since one reject had been encountered.

The printing was carried out by one printshop operator.

This printed sheet was punched with a punching die, along the white printed portion, to form 24 individual square sheets 7 of 105mm side length, corresponding to the 24 square printed areas.

One such individual sheet 7 was placed in the cavity 1 of a moulding die 2, made in such a manner that a moulding of 3mm thickness in the form of a square of 105mm side length was obtained.

No particular devices and jigs were required for charging the sheet 7 into the die cavity 1, as the operation was most easily performed manually taking approximately one second.

The printed surface 8 of the sheet 7 was placed so that it faced the surface of the die cavity, and though it did not form a complete seal-contact with the die surface, this did not impede the moulding process in any way.

The die was closed and the molten acrylic resin 6 was injected for injection-moulding under the normal conditions generally applied in this process.

The gate 5 had been prepared in such a manner that the jet of resin 6 issuing into the cavity 1 was directed parallel to the plane of the sheet 7.

The mouldings thus obtained had a polycarbonate layer of 0.5mm thickness and had white speed markings from 0km/hr to 200km/hr at an incremental pitch of 1km/hr each and numberes, in a square of 105mm side length, with a thickness of 3mm, while the surrounding background was black. When light was shone from the rear (backlighting), the markings and numbers stood out clearly, and there were no pinholes in the entire black background or any effusion of light.

## EXAMPLE 2

In this example the printing steps are analogous to those of Example 1, but for the moulding process, a die had been prepared in such a manner that 10mm diameter perforations would appear in the moulding by imparting 10mm diameter projections onto the centre part of the die described in Example 1, or in such a manner that the moulding would intersect the die surface in a circle of 48mm radius (with the centre of the die surface and the centre of the circle aligned) by providing spherical convexity on the moving side of the die and by producing spherical indentation of the same dimensions so as to obtain a thickness of 3mm on the fixed (immobile) side of the die. Except for the use of this die, the moulding conditions were identical to those of Example 1.

The mouldings thus obtained had white markings and lettering left blank on the inner periphery of the spherical recess, while the background was black and had an attractive three-dimensional appearance.

When backlighting was applied to this, the markings and lettering appeared to stand out very clearly, with no pinholes and no light effusion being visible on the black background.

## EXAMPLE 3

The moulding described in Example 2 was taken and a die was prepared so that a frame of 3mm thickness and 5mm height was applied to its periphery.

Except for the fact that this was used and that a reticulated polycarbonate net was employed as the moulding resin to obtain the moulding, the moulding process was performed under the same conditions as those given in Example 1.

The mouldings thus obtained were 3mm in thickness and 105mm square, and the 0.5mm surface layer had a polycarbonate section, with a frame of 3mm thickness and 5mm height applied to the peripheral part thereof, and having which blanked-out markings and lettering on the inner periphery of the spherical recess while the background had an appealing black, three-dimensional appearance.

When backlighting was applied to this, the markings and lettering appeared to stand out very clearly, with no pinholes and conglomerations thereof and with no light effusion being visible on the black background.

## EXAMPLE 4

The moulding process was performed by conducting a printing operation, under the same conditions as described in Example 1, the only difference being that on the white printing described in Example 1, bands of 8mm width were printed, with red ink, so that the markings became red between 120km/hr and 200km/hr.

The mouldings thus obtained had the same shape as those of Example 1 and the lettering and the markings from 0km/hr to 119km/hr were white while the speed markings from 120km/hr to 200km/hr were red, while the other areas were black.

The film thickness of the white ink layer was $8\mu$ while the film thickness of the red ink layer was $6\mu$, whereas the black ink layer which had been applied by superimposing two layers had a total film thickness of $16\mu$.

When backlighting was applied to this, the markings and lettering appeared to stand out very clearly, with no pinholes and no light effusion being visible on the black background.

## EXAMPLE 5

The thickness of the polycarbonate sheet used in Example 1 was 2.0mm and printing was performed in the same manner as in Example 1.

The film thickness of the white ink layer was $7\mu$ and the film thickness of the black ink layer was $17\mu$.

Except for the fact that after punching out the above printed sheet to a 105mm square, the thickness was 5mm, the same moulding die as that described in Example 1 was prepared and used, and the sheet inserted in the cavity of the die, the die closed and the molten resin injection-moulded.

The thickness of the resin part for moulding was 3mm, and the total thickness including the sheet layer was 5mm. This led to a product having the same appearance as that described in Example 1.

There was no pinhole formation detectable under backlighting.

EXAMPLE 6

A white print was applied, by the screen printing method, to the entire surface area, except for a 5mm section on each periphery, of a polycarbonate sheet of 0.2mm thickness, 580mm height, and 430mm width.

The film thickness of this ink layer was $7\mu$.

Upon this, a total of 50 black print areas were applied at a pitch of 40mm height and 110mm width each, so that markings were obtained in the centre from 0 to 100. In the marking area corresponding to 60 a yellow print, and in the marking area corresponding to 80 a red print was applied above the white print.

The respective film thicknesses were $9\mu$ for the yellow and $7\mu$ for the red print areas.

Upon this, blanked out markings and lettering were printed with black ink so that fine markings appeared at a pitch of 1 at a time from 0 to 100 and bold markings at a pitch of 10. Moreover, on one side or one sideline from these blanked-out markings and lettering, 0.5mm large blanked-out markings and lettering were superimposed in black ink thereupon.

The total film thickness of the double black print was $20\mu$.

The time required for printing totalled 75 seconds. This is approximately 1/20th of the time required for printing the mouldings directly.

The moulding die was prepared so that mouldings in the form of curved plates with a thickness dimension of 4mm, a short side of 4cm and a long side of 11cm were obtained, with the long side describing a circular arc of 130mm radius.

The gate was provided parallel to the sheet at the end of the long side of the die.

The above printed sheet was punched out with a punching die at a pitch of 4cm height and 11cm width so as to produce a sheet for placing in the moulding die.

The sheet thus obtained was inserted into the cavity of the moulding die (recessed side of moulding) in such a manner that the non-printed surface came in contact with the concave die surface, and the die was closed and molten acrylic resin injection-moulded under the usual conditions.

The mouldings thus obtained has a short side of 4cm and a long side of 11cm, with the long side having a simply curved surface describing a circular arc of 130mm radius, with the concave front surface being of acrylic resin, and the convex rear surface, polycarbonate resin fused thereon.

The acrylic resin of the front surface imparts an appearance of depth to the markings and lettering, and the application of backlighting showed no effusion of colour.

The thicknesses of the ink films applied as single layers in each of the above Examples were $8\mu$, $6\mu$, $7\mu$ and $9\mu$, respectively, while the thicknesses of the ink films applied as double layers were $15\mu$, $16\mu$, $17\mu$ and $20\mu$, respectively. However, even when the single layer thickness was $4\mu$, and the double layer thickness $8\mu$, the result was the same in that no light effusion was detectable.

COMPARISON 1

A moulding of 3mm thickness and 105mm square was obtained by injection-moulding using the die described in Example 1 and by using an acrylic resin.

Printing of the same nature as described in Example 1 was applied by preparing the setting jigs for the screen-printing of these mouldings.

White, black, and black printed patterns were applied on a total of 24 mouldings. The time required for this printing operation amounted to 432 seconds, that is, seven minutes and 12 seconds. This is roughly 12 times the time required for printing in Example 1 which amounted to only 37 seconds.

Even after allowing for the time required for placing the sheet into the moulding die (37 seconds + 24 seconds = 61 seconds), the printing takes roughly seven times the time required in Example 1.

Even if the time required for punching the individual panels of Example 1 with a punching die, so as to prepare the sheet for insertion into the moulding die, is counted and taken into consideration (61 seconds + 1 second/each x 24 = 85 seconds), it is clear that the printing time is roughly five times that of Example 1.

The operation was performed by one operator, and no light effusion and pinholes were observed on backlighting.

However, five rejects were encountered due to print misalignment and ink smudging resulting from flatness deficiencies in the mouldings, so that the yield was 79.2%

COMPARISON 2

Mouldings with 10mm diameter perforations in the centre were obtained, being 3mm thick and 105mm square and having a shape such that the spherical projection of 250mm radius intersects with the planar surface in a circle of 96mm diameter, by using the moulding die described in Example 2 and by using an acrylic resin for injection-moulding..

These mouldings were then printed with patterns of the same nature as those of Example 2 by using the PAD printing method.

The white ink film thickness was $1\mu$ and the black film applied in two layers had a total thick-

ness of 1.8$\mu$. When backlighting was applied, the light source was visible through the transparent product which was therefore wholly unfit for use.

COMPARISON 3

The mouldings were prepared with surface layers of different properties by using a sheet printed by squeezing the ink in such a manner as to obtain a white ink film thickness of 3$\mu$ and a superimposed double black ink film thickness totalling 7$\mu$ as in Example 1. Upon backlighting, these mouldings showed seven to eight pinholes in the white blanked-out parts whereas in the black background there were two or three pinholes so that these products were not suitable for use.

COMPARISON 4

When an 0.08mm sheet was used in the method of Example 1 and placed into the moulding die after printing and punching-out, it was mechanically too weak to maintain its upright position and bent over. Moulding was performed in this condition, when the sheet was found to cover only approximately two thirds of the surface area of the moulding while one third of the moulding resin was exposed.

COMPARISON 5

Printing was performed by using a sheet of 2.2mm thickness instead of the sheet used in Example 5.

The punching die described in Example 5 was used for punching, but the punching operation was not possible to perform, and where punching was possible it left bad nicks and uneven edges so that the product was not fit for use so that the process was not pursued to the moulding stage.

While there has been described what are at present considered to be preferred embodiments of the invention, it will be understood that various modifications may be made thereto, and it is intended that the appended claims cover all such modifications as fall within the true spirit and scope of the invention.

**Claims**

1. A synthetic resin moulding having two layers of different properties formed by fusion-jointing, one of the layers being a synthetic resin sheet of 0.1mm - 2.0mm thickness that has been printed in such a manner that it bears an ink film applied as a single layer of at least 4$\mu$ thickness or an ink film applied in two or more layers to a thickness of at least 8$\mu$.

2. A synthetic resin moulding with a front or rear layer of different properties formed by fusion-jointing, to the front or rear surfaces of the moulding a synthetic resin sheet of 0.1mm - 2.0mm thickness that has been printed in such a manner that a first area of the sheet bears an ink film applied as a single layer of at least 4$\mu$ thickness and a second area of the sheet bears an ink film applied in two or more layers to a thickness of at least 8$\mu$.

3. A synthetic resin moulding as described in Claim 1 or 2 above in which the sheet is printed on one or both sides.

4. A method for the manufacture of synthetic resin mouldings having a front or rear layer of different properties characterised in that a 0.1mm - 2.0mm thick resin sheet is imparted with an ink layer forming a single layer of 4$\mu$ thickness or more or an ink layer forming two layers of 8$\mu$ thickness or more, and is shaped so as to be able to be placed inside a moulding die, and is placed into the moulding die so that it is adjacent to a surface of the die cavity, whereupon the die is closed and molten resin is injected into the die.

5. A method for the manufacture of synthetic resin mouldings in accordance with Claim 4, characterised in that the printing operation is performed after the synthetic resin sheet has been shaped into a form so that it can be place into the die.

6. A method for the manufacture of synthetic resin mouldings in accordance with Claim 4 and/or 5 characterised in that, when the sheet is printed on only one surface, the synthetic resin sheet is charged so that the printed surface faces the adjacent surface of the die cavity.

7. A method for the manufacture of synthetic resin mouldings in accordance with Claim 4 or 5 characterised in that, when the sheet is printed on only one surface, the synthetic resin sheet is charged so that the printed surface does not face the adjacent surface of the die cavity.

# FIG.1

European
Patent Office

EUROPEAN SEARCH
REPORT

Application Number

EP 90 12 0081

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 917 927  (SAKAITANI) <br> * the whole document * <br> – – – – – | 1-7 | B 29 C 45/14 |

TECHNICAL FIELDS
SEARCHED (Int. Cl.5)

B 29 C

The present search report has been drawn up for all claims

| Place of search | Date of completion of search | Examiner |
|---|---|---|
| The Hague | 11 June 91 | BOLLEN J.A.G. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document